Europäisches Patentamt

European Patent Office

Office européen des brevets

(19)

(11) Numéro de publication: **0 201 391**
**B1**

# (12) FASCICULE DE BREVET EUROPEEN

(45) Date de publication du fascicule du brevet:
14.06.89

(21) Numéro de dépôt: 86400835.4

(22) Date de dépôt: 17.04.86

(51) Int. Cl.⁴: **B 23 K 26/18, G 03 C 11/02**

(54) Procédé et appareil pour le marquage des films.

(30) Priorité: 19.04.85 FR 8505937

(43) Date de publication de la demande:
12.11.86 Bulletin 86/46

(45) Mention de la délivrance du brevet:
14.06.89 Bulletin 89/24

(84) Etats contractants désignés:
AT BE CH DE GB IT LI LU NL SE

(56) Documents cités:
DE-A- 2 205 606
FR-A- 2 533 328

(73) Titulaire: **Cinéma Magnétique Communication (C.M.C.),
11, rue Danicourt, F-92240 Malakoff (FR)**

(72) Inventeur: **Carels, Raymond, 41 Avenue d'Avril,
B-1200 Woluwe Saint Lambert (BE)**

(74) Mandataire: **Picard, Jean-Claude Georges et al, Cabinet
Plasseraud 84, rue d'Amsterdam, F-75009 Paris (FR)**

ACTORUM AG

## Description

La présente invention concerne un procédé et un appareil pour la gravure (appelée ici marquage) de matériaux multicouches, plus particulièrement de films photographiques ou cinématographiques.

Pour marquer les films photographiques ou cinématographiques, notamment en vue de leur sous-titrage, on attaque chimiquement les colorants contenus dans l'émulsion du film développé, en veillant à ne pas attaquer le support cellulosique. Ce procédé est long et nécessite un grand nombre de manipulations complexes ainsi que l'emploi de nombreux produits chimiques. De ce fait, son automatisation est malaisée et son exploitation nécessite des précautions particulières pour éviter des phénomènes de pollution ce qui rend le procédé fort coûteux.

Dans le brevet français Fr-A-2111 201 on a proposé des moyens d'enregistrement d'images particuliers qui sont constitués d'un support en verre revêtu d'une couche de noir de fumée dispersé dans de la nitrocellulose contenant un plastifiant et qui sont susceptibles d'être marqués par destruction de la couche adhérente au moyen d'un rayonnement de forte intensité produit par laser. Dans ce procédé, le support n'est pas sensible à la chaleur, de sorte que la vitesse de marquage et l'intensité du rayonnement ne sont pas critiques. Le support ne convient pas pour la fabrication de films cinématographiques et l'image enregistrée est nécessairement en noir et blanc.

On a par ailleurs proposé dans le brevet européen EP-A1-0 036 680 de marquer des objets en revêtant leur surface au moyen d'une résine synthétique, telle que le polypropylène, chargée en un colorant à base de silicium (bleu d'outremer) et en exposant la surface à l'irradiation par un rayonnement produit par laser après l'avoir protégée par un masque dans lequel on a découpée la forme de l'image à reproduire. On observe ainsi la formation d'une marque dont la couleur contraste avec la couleur de fond de la résine et qui est identifiée par observation directe. Le colorant n'est pas nécessairement transformé sur toute l'épaisseur du revêtement et les traits ne sont pas d'une précision et d'une régularité parfaites. Ce mode de marquage ne convient pas de ce fait pour les films cinématographiques ou photographiques, pour lesquels il est essentiel de modifier la couche d'émulsion sur toute sa profondeur, et d'avoir des traits extrêmement précis et réguliers, étant donné les agrandissements auxquels les images seront soumises.

La présente invention vise à résoudre les problèmes rencontrés lors du marquage des matériaux multicouches tels que les films photographiques ou cinématographiques selon les procédés connus. Elle vise à fournir un procédé qui permette de transformer la couche de revêtement, ou émulsion, sur toute son épaisseur, qui n'attaque pas le support, qui ne nécessite pas le balayage complet de la surface du film, qui ne nécessite pas l'emploi de masques dans lesquels est découpée la marque à reproduire et qui donne des images précises et régulières. Le procédé permet de marquer le matériau au moyen de traits bordés de part et d'autre par un liseré noir.

La présente invention consiste en un procédé pour le marquage, au moyen de traits continus ou discontinus de 10 à 250 microns de largeur, de films et plaques photographiques ou films cinématographiques comprenant un support et une couche superficielle de revêtement, selon lequel on irradie la couche superficielle au moyen d'un rayonnement produit par laser et pouvant être absorbé par la couche superficielle, et on déplace un faisceau de ce rayonnement de largeur sensiblement égale à celle du trait à tracer sur la couche superficielle avec une vitesse telle que le rapport entre la vitesse de déplacement du faisceau, v, exprimée en cm/s et l'intensité du rayonnement correspondante exprimée sous la forme de la puissance du flux de rayonnement atteignant la couche superficielle, P, exprimée en watts, est donnée par la relation:

$$v/P = K \cdot e^{-I/400} \qquad (I)$$

où K vaut 4,1 (± 40%), et I représente la largeur du trait exprimée en microns.

Le procédé selon l'invention convient particulièrement bien pour marquer des matériaux multicouches au moyen de traits d'une largeur de 20 à 220 microns. Il peut convenir pour marquer des matériaux multicouches au moyen de traits de largeur constante ou variable. Il convient particulièrement bien pour l'écriture sur les films et plaques photographiques on films cinématographiques.

Pendant l'écriture, on maintient de manière avantageuse le rapport v/P quasi constant pour une largeur de trait prédéterminée constante. Dans ce cas, les fluctuations du rapport v/P maximum admises sont de 5%.

Dans le cas où la puissance du flux de rayonnement varie, la puissance à considérer est la puissance moyenne dans l'intervalle de temps $\Delta t$ telle que définie par la relation

$$P = \frac{1}{\Delta t} \cdot \int_{t-\Delta t/2}^{t+\Delta t/2} P_i \cdot dt$$

où $P_i$ représente les valeurs instantanées de la puissance et $\Delta t$ est l'intervalle d'intégration, dont la valeur est comprise entre le temps que met le faisceau pour parcourir une distance égale à la largeur du trait ($\Delta t_{max}$) et 0,25 fois ce temps ($\Delta t_{min} = 0,25 \cdot \Delta t_{max}$).

Par vitesse, on entend désigner la vitesse moyenne dans l'intervalle de temps $\Delta t$ telle que définie par la relation

$$v = \frac{1}{\Delta t} \cdot \int_{t-\Delta t/2}^{t+\Delta t/2} \sqrt{v_x^2 + v_y^2} \cdot dt$$

$$v_x = \frac{dX_p}{dt} \qquad et \qquad v_Y = \frac{dY_p}{dt}$$

$X_p$ et $Y_p$ représentant respectivement l'abscisse et l'ordonnée du point d'impact du faisceau sur le matériau multicouche selon un système de coordonnées rectangulaires à deux dimensions (X, Y) dans un plan confondu avec la couche superficielle du matériau.

Le rayonnement utilisé pour la réalisation du procédé selon l'invention peut être produit par divers types de lasers connus en soi. En général, on utilise un rayonnement de longueur d'onde comprise entre 350 et 800 nm et de préférence entre 400 et 700 nm. Les meilleurs résultats ont été obtenus avec un rayonnement de 450 à 520 nm. Le rayonnement peut être monochromatique ou polychromatique. La puissance du flux de rayonnement peut varier dans de larges limites; elle est en général telle que la puissance au niveau de la couche superficielle est de 0,1 à 200 watts et de préférence de 0,5 à 100 watts. Les lasers utilisés fonctionnent en mode continu ou quasi continu; on entend par là que les émissions lumineuses sont pulsées à haute fréquence, de préférence à plus de 50 kHz. De bons résultats ont été obtenus avec un laser à argon ionisé. La largeur du faisceau du rayon laser au niveau de la couche superficielle est sensiblement égale à celle du trait à tracer, en général à moins de 20% près.

Par matériaux multicouches selon l'invention, on entend désigner des matériaux contenant un support revêtu d'une couche superficielle qui contient des polymères organiques et des colorants. Le support peut être transparent ou translucide; il est de préférence transparent. Il peut être réalisé en un matériau inorganique tel que le verre ou en un matériau organique. L'épaisseur du support n'est pas critique; le plus souvent elle est de 0,01 à 10 mm. La couche superficielle a en général une épaisseur de 1 à 100 microns et le plus souvent de 5 à 50 microns. L'épaisseur de la couche superficielle est de préférence constante dans la zone irradiée.

La procédé selon l'invention convient bien pour marquer des matériaux multicouches dans lesquels on désire laisser le support intact et marquer la couche superficielle sur toute son épaisseur en la vaporisant.

Le procédé selon l'invention convient particulièrement bien pour le marquage de films photographiques ou cinématographiques développés et notamment pour leur sous-titrage. Dans ce cas, le liseré noir caractéristique de ce type de marquage améliore la lisibilité et ce, particulièrement lors de l'écriture dans des zones claires de l'image. Ces films comprennent un support qui est en général à base d'un dérivé cellulosique tel que le triacétate de cellulose ou à base d'un polymère synthétique tel qu'un polyester et une couche superficielle qui est une «émulsion» photographique développée. L'«émulsion» contient en général un dispersant tel que la gélatine, des colorants et divers additifs qui peuvent être choisis notamment parmi les copulants chromogènes, les agents durcisseurs, les agents mouillants et les agents antimoisissures.

Le marquage du matériau multicouche selon l'invention peut se faire dans diverses conditions. On peut opérer sous des pressions absolues variables, en général de $10^{-4}$ à 2 kg/cm$^2$ et le plus souvent de $10^{-3}$ à 1,5 kg/cm$^2$. On peut opérer en présence de différents gaz tels que l'air, l'oxygène ou les gaz inertes comme l'azote ou les gaz rares.

Le matériau multicouche peut être préchauffé à différentes températures. En général, la température du matériau multicouche soumis au marquage est de 0 à 200 °C. De manière avantageuse, elle est de 0 à 150 °C.

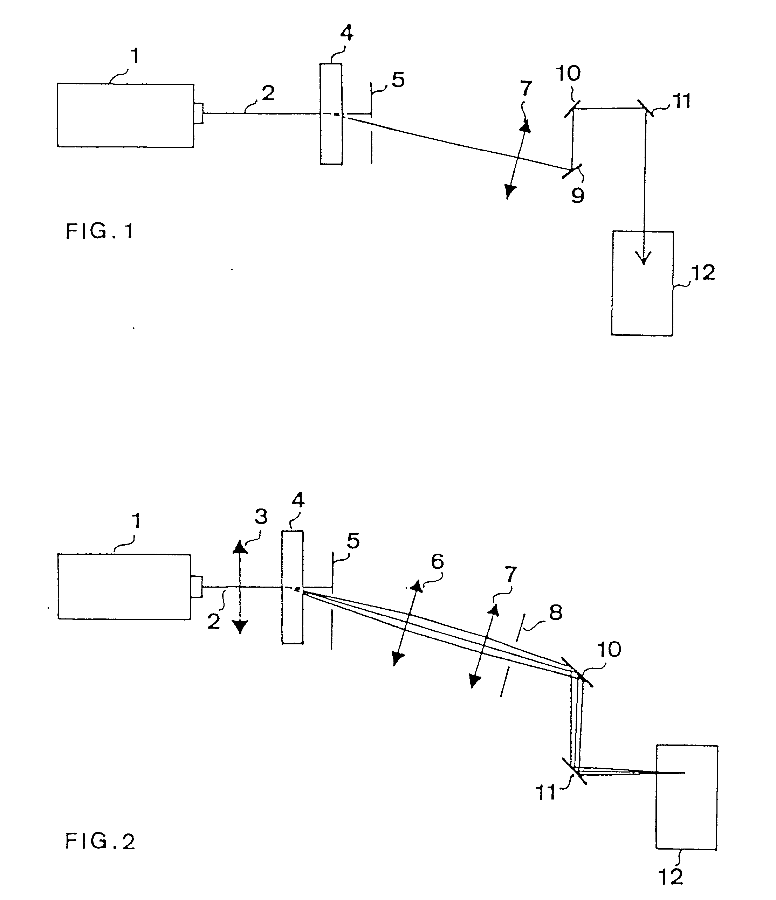

Des modes particuliers de réalisations du procédé selon l'invention sont représentés aux figures 1 et 2 des dessins en annexe.

A la figure 1, la source laser 1 émet un rayon visible monochromatique 2. Un système de modulation 4 permet la modulation en continu de l'intensité du rayonnement sur la couche superficielle et son extinction. Divers systèmes de modulation peuvent être utilisés à cet usage, tels que des modulateurs acousto-optiques, des modulateurs électro-optiques. De bons résultats ont été obtenus avec des modulateurs acousto-optiques.

Entre la source laser 1 et le système de modulation 4, on peut facultativement disposer sur le trajet du rayonnement un séparateur de faisceau qui dévie une fraction de faisceau vers un appareil de mesure de manière à pouvoir contrôler en permanence l'intensité du rayonnement produit par laser.

Un diaphragme facultatif 5 permet de sélectionner une partie du faisceau à la sortie du système de modulation 4.

Un système de focalisation optique 7 est disposé à une distance du film à marquer telle qu'il soit légèrement défocalisé, la défocalisation étant fonction de la largeur du trait désirée.

Un miroir facultatif 9 permet d'orienter le faisceau avant de l'envoyer dans un dispositif de déviation (10, 11) qui permet la déviation du faisceau sur le film 12 selon deux axes en général perpendiculaires X et Y. Divers dispositifs de déviation appelés ci-après «scanners» peuvent être utilisés à cette fin, tels que des systèmes galvanométriques à miroirs, des systèmes acousto-optiques, ou des systèmes électro-optiques. De bons résultats ont été obtenus avec des systèmes galvanométriques à miroirs. Le scanner est disposé de préférence de manière à ce que l'incidence du faisceau sur le film 12 soit quasi normale.

Lorsque le scanner a un temps de réponse assez long, c'est-à-dire lorsque la déviation du faisceau n'est pas simultanée par rapport au signal de commande de cette déviation, le scanner peut comporter deux systèmes asservis de position pourvus de capteurs de position. Les signaux provenant de ces capteurs de position permettent à l'intervention d'un calculateur de varier l'intensité du rayonnement à la sortie du système de modulation 4 de manière à obtenir l'intensité du rayonnement sur le film correspondant à la vitesse de déplacement du faisceau sur le film comme définie à la relation (I) ci-avant. D'autres moyens équivalents peuvent être utilisés.

Lorsque le scanner a un temps de réponse très court, c'est-à-dire lorsque la déviation du faisceau est quasi instantanée par rapport au signal de commande, il n'est pas nécessaire de prévoir des moyens particuliers supplémentaires pour mesurer la vitesse d'écriture, celle-ci étant directement fonction de la vitesse calculée à partir des signaux de commande.

Le système de focalisation 7 peut être disposé entre le système de modulation 4 et le dispositif de déviation (10, 11) ou entre ce dernier et le film 12.

La figure 2 réprésente un mode particulier de réalisation du procédé selon l'invention, qui convient particulièrement bien pour le marquage au moyen de rayonnements polychromatiques produits par laser. Ce mode de réalisation est voisin de celui représenté à la figure 1, à quelques détails opératoires près.

Un système de focalisation optique 3 est disposé sur le faisceau issu de la source laser entre celle-ci et le centre du système de modulation 4, à une distance de ce dernier égale à la distance focale du système de focalisation 3.

Un deuxième système de focalisation optique 6 est disposé à la sortie du système de modulation 4 après le diaphragme 5 de manière à ce que son foyer se trouve au centre du système de modulation 4. Un diaphragme 8 peut facultativement être disposé sur le faisceau qui a traversé le troisième système de focalisation optique 7.

Dans les divers modes de réalisation du procédé selon l'invention, on peut utiliser divers systèmes de focalisation optique connus en soi. De bons résultats ont été obtenus avec des lentilles optiques convergentes.

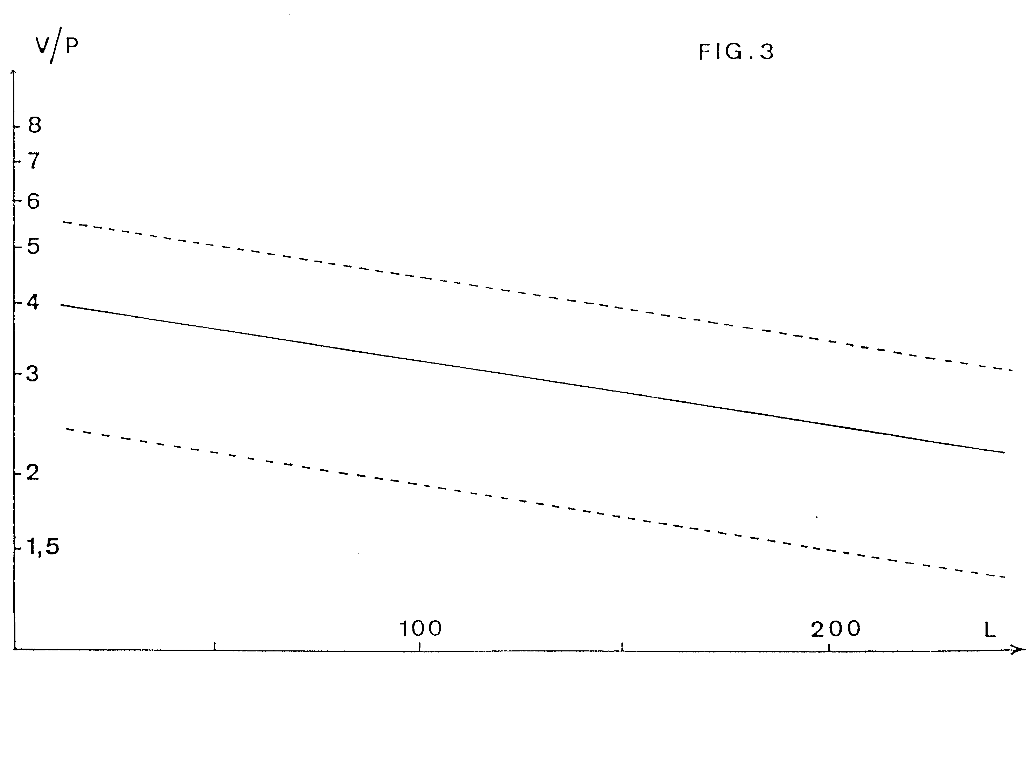

La figure 3 représente l'évolution du rapport vitesse d'écriture (cm/s) sur puissance du flux de rayonnement atteignant la couche superficielle (watt) en fonction de la largeur de trait (micron). La droite en trait plein est la valeur moyenne donnée par la relation (I) et les deux droites en traits pointillés représentent les valeurs limites.

L'invention concerne également un appareillage convenant pour le marquage de matériaux multicouches comprenant un support et une couche superficielle de revêtement au moyen de traits continus ou discontinus par irradiation au moyen d'un rayonnement produit par laser, comportant:

a) une source laser produisant un rayonnement de longueur d'onde telle qu'il puisse être absorbé par la couche superficielle,

b) un système de modulation qui permet la modulation en continu de l'intensité du rayonnement et son extinction,

c) un système de focalisation optique disposé à une distance du matériau multicouche à marquer telle que ce dernier soit légèrement défocalisé de manière à ce que la zone irradiée ait une largeur de 10 à 250 microns,

d) un dispositif de déviation permettant la déviation du faisceau de rayonnement sur le matériau multicouche selon au moins deux axes,

e) des moyens pour mesurer la vitesse de déplacement du faisceau de rayonnement sur le matériau multicouche,

f) un bloc comportant un calculateur commandant le système de modulation b) de manière à adapter l'intensité du rayonnement sur le matériau multicouche à la vitesse de déplacement du faisceau sur le matériau multicouche mesurée par les moyens e) et,

g) des moyens pour orienter le faisceau de rayonnement quasi perpendiculairement à la surface du matériau multicouche à marquer sur les zones à marquer.

Le bloc f) contrôle à tout instant l'intensité du rayonnement sur le matériau multicouche via le système de modulation b), de manière à assurer un rapport intensité du rayonnement sur vitesse de déplacement du faisceau sur la couche superficielle (ou vitesse d'écriture) constant pour une largeur de trait fixée. Il peut comporter divers calculateurs connus en soi. On peut ainsi utiliser un système analogique, digital, ou une combinaison de ces deux techniques.

A tout moment, le bloc f) est informé des déviations du faisceau selon deux axes (X et Y), imposées par le dispositif de déviation d).

Exemple

Les essais ont été réalisés dans un appareil tel que celui représenté à la figure 2.

On a utilisé comme source de rayonnement un laser à argon ionisé fonctionnant en polychromie. Le système de modulation 4 utilisé est un modulateur acousto-optique. En 3 et 6, on a placé des lentilles convergentes ayant une distance focale de 20 cm et 30 cm respectivement. En 7, on a disposé une lentille de focalisation de 18 cm de distance focale. La lentille est placée sur le faisceau à une distance du film telle qu'elle soit légèrement défocalisée par rapport au film de manière à avoir la largeur de trait souhaitée.

On a ainsi tracé un trait de 175 microns en utilisant une vitesse d'écriture de 5,4 cm/s et en ajustant la puissance au niveau du film à 2,14 watt; un trait de 80 microns a été tracé avec une vitesse d'écriture de 7,85 cm/s et une puissance au niveau du film de 2,29 watts; un trait de 64 microns a été tracé avec une vitesse d'écriture de 15,3 cm/s et une puissance au niveau du film de 4,20 watts.

**Revendications**

1. Procédé pour le marquage au moyen de traits continus ou discontinus, de 10 à 250 microns de largeur, de films et plaques photographiques ou films cinématographiques comprenant un support et une couche superficielle de revêtement, selon lequel enlève la couche superficielle au moyen d'un rayonnement produit par laser et pouvant être absorbé par la couche superficielle et on déplace un faisceau de ce rayonnement de largeur sensiblement égale à celle du trait à tracer sur la couche superficielle avec une vitesse telle que le rapport entre la vitesse de déplacement du faisceau, v, exprimée cm/s et l'intensité du rayonnement correspondant exprimée sous la forme de la puissance du flux de rayonnement atteignant la couche superficielle, P, exprimée en watts, est donné par la relation

$$v/P = K \cdot e^{-I/400}$$

où K vaut 4,1(±40%), et I représente la largeur du trait exprimée en microns.

2. Procédé selon la revendication 1, caractérisé en ce que le rayonnemant produit par laser a une longueur d'onde de 400 à 700 nm.

3. Procédé selon l'une quelconque des revendications 1 ou 2, caractérisé en ce que la puissance du flux de rayonnement atteignant la couche superficielle est de 0,1 à 200 watts.

4. Procédé selon l'une quelconque des revendications 1 à 3, caractérisé en ce qu'il est appliqué au marquage de matériaux dont la couche superficielle a une épaisseur de 1 à 100 microns.

5. Procédé selon l'une quelconque des revendications 1 à 4, caractérisé en ce qu'il est appliqué au marquage au moyen de traits de 20 à 220 microns de largeur.

6. Procédé selon l'une quelconque des revendications 1 à 5, caractérisé en ce que les films et plaques photographiques ou films cinématographiques sont préchauffés à une température de 0 à 200 °C avant le marquage.

7. Appareil pour le marquage de films et plaques photographiques ou films cinématographiques comprenant un support et une couche superficielle de revêtement, au moyen de traits continus ou discontinus par irradiation au moyen d'un rayonnement produit par laser, l'appareil comprenant:

a) une source laser (1) produisant un rayonnement de longueur d'onde telle qu'il puisse être absorbé par la couche superficielle,

b) un système de modulation (4) qui permet la modulation en continu de l'intensité du rayonnement et son extinction,

c) un système de focalisation optique (7) disposé à une distance du matériau multicouche à marquer telle que ce dernier soit légèrement défocalisé de manière à ce que la zone irradiée ait une largeur de 10 à 250 microns,

d) un dispositif de déviation (10, 11) permettant la déviation du faisceau de rayonnement sur le matériau multicouche selon au moins deux axes,

e) des moyens pour mesurer la vitesse de déplacement du faisceau de rayonnement sur le matériau multicouche,

f) un bloc comportant un calculateur commandant le système de modulation b) de manière à adapter l'intensité du rayonnement sur le matériau multicouche à la vitesse de déplacement du faisceau sur le matériau multicouche mesurée par les moyens e) et,

g) des moyens pour orienter le faisceau de rayonnement quasi perpendiculairement à la surface du matériau multicouche à marquer sur les zones à marquer.

**Patentansprüche**

1. Verfahren zum Markieren von photographischen Filmen und Platten oder kinematographischen Filmen, die einen Träger und eine Oberflächenschicht aufweisen, mit durchgehenden oder unterbrochenen Strichen einer Breite von 10 bis 250 Mikron, dadurch gekennzeichnet, daß die Oberflächenschicht einer von einem Laser erzeugten und von der Oberflächenschicht absorbierbaren Strahlung ausgesetzt wird, indem ein Strahlenbündel mit einer Breite, die im wesentlichen gleich der gewünschten Strichbreite ist, über die Oberflächenschicht mit solcher Geschwindigkeit verschoben wird, daß das Verhältnis zwischen der jeweiligen Verschiebungsgeschwindigkeit v des Strahlenbündels, ausgedrückt in cm/s, und der entsprechenden Strahlungsintensität, ausgedrückt durch die Flußstärke P in Watt der auf die Oberflächenschicht auftreffenden Strahlung, gegeben ist durch

$$v/P = K \cdot e^{-I/400},$$

wobei K den Wert 4,1 (± 40%) hat und I die Strichbreite in Mikron ist.

2. Verfahren nach Anspruch 1, dadurch gekennzeichnet, daß die vom Laser erzeugte Strahlung eine Wellenlänge von 400 bis 700 nm hat.

3. Verfahren nach Anspruch 1 oder 2, dadurch gekennzeichnet, daß die Flußstärke der auf die Oberflächenschicht auftreffenden Strahlung 0,1 bis 200 Watt beträgt.

4. Verfahren nach einem der Ansprüche 1 bis 3, dadurch gekennzeichnet, daß es zum Markieren von Materialien angewendet wird, deren Oberflächenschicht eine Dicke von 1 bis 100 Mikron hat.

5. Verfahren nach einem der Ansprüche 1 bis 4, dadurch gekennzeichnet, daß es zum Markieren mit einer Strichbreite von 20 bis 220 Mikron angewendet wird.

6. Verfahren nach einem der Ansprüche 1 bis 5, dadurch gekennzeichnet, daß die photographischen Filme oder Platten bzw. die kinematographischen Filme vor dem Markieren auf eine Temperatur von 0 bis 220 °C erwärmt werden.

7. Apparat zum Markieren von photographischen Filmen und Platten oder kinematographischen Filmen, die einen Träger und eine Oberflächenschicht aufweisen, mit durchgehenden oder unterbrochenen Strichen durch Bestrahlung mittels einer von einem Laser erzeugten Strahlung, gekennzeichnet durch

a) eine Laserquelle (1), die eine Strahlung mit einer solchen Wellenlänge erzeugt, daß die Strahlung von der Oberflächenschicht absorbiert werden kann,

b) ein Modulationssystem (4), das eine kontinuierliche Modulation der Intensität der Strahlung und eine Unterdrückung desselben ermöglicht,

c) ein optisches Fokussierungssystem (7), das mit Abstand von dem zu markierenden mehrschichtigen Material angeordnet und derart schwach defokussiert ist, daß die bestrahlte Zone eine Breite von 10 bis 250 Mikron hat,

d) ein Ablenkungssystem (10, 11), das eine Ablenkung des Strahlenbündels am mehrschichtigen Material in wenigstens zwei Achsrichtungen ermöglicht,

e) eine Einrichtung zum Messen der Verschiebungsgeschwindigkeit des Strahlenbündels am mehrschichtigen Material,

f) einen Block, der einen Rechner enthält, welcher das Modulationssystem (b) derart steuert, daß die Strahlungsintensität am mehrschichtigen Material der von der Meßeinrichtung (e) gemessenen Verschiebungsgeschwindigkeit des Strahlenbündels am mehrschichtigen Material angepaßt wird, und

g) eine Einrichtung zur quasinormalen Orientierung des Strahlenbündels auf die Oberfläche des zu markierenden mehrschichtigen Materials in der zu markierenden Zone.

## Claims

1. Process for marking, by means of continuous or broken lines, from 10 to 250 microns wide, films and photographic plates or cinematographic films comprising a base and a surface layer of coating according to which one removes the surface layer by means of radiation which is produced by a laser and which is capable of being absorbed by the surface layer and one displaces a beam from this radiation, the width of which is substantially equal to that of the line to be traced on the surface layer, at a speed whereby the ratio between the speed of the displacement of the beam, v, expressed in cm/s and the corresponding radiation level expressed in terms of the power of the radiation flux reaching the surface layer, P, expressed in watts, is given by the formula:

$$v/P = K \cdot e^{-l.400},$$

where K equals 4.1 (± 40%) and l represents the width of the line expressed in microns.

2. Process according to claim 1, characterised in that the radiation produced by the laser has a wavelength of between 400 and 700 nm.

3. Process according to any one of the claims 1 or 2, characterised in that the power of the radiation flux reaching the surface layer is from 0.1 to 200 watts.

4. Process according to any one of the claims 1 to 3, characterised in that it is applied to the marking of materials whose surface layer is from 1 to 100 microns thick.

5. Process according to any one of the claims 1 to 4, characterised in that it is applied to marking by means of lines which measure from 20 to 220 microns wide.

6. Process according to any one of the claims 1 to 5, characterised in that the films and photographic plates or cinematographic films are heated to a temperature of 0 to 200 °C before marking.

7. Apparatus for marking films and photograpic plates or cinematographic films comprising a base and a surface layer of coating, by means of continuous or broken lines via exposure to rays produced by a laser. This apparatus comprising:

a) a laser source (1) producing radiation with a wavelength which is capable of being absorbed by the surface layer,

b) a system of modulation (4) which allows a continuous modulation of the radiation level and of its extinction,

c) a system of optical focusing (7) which is positioned at a distance from the multilayered material to be marked whereby the latter is slightly out of focus, and in such a way that the irradiated area is from 10 to 250 microns wide,

d) a deflecting device (10, 11) which allows the radiation beam to be deflected on to the multilayered material about at least two axes,

e) means for measuring the speed at which the radiation beam is displaced over the multilayered material,

f) a block comprising a calculator controlling the modulation system (b) in such a way as to adapt the level of the radiation on the multilayered material to the speed at which the beam is displaced over the multilayered material as measured by the means (e), and

g) means for directing the radiation beam at a quasi perpendicular angle to the surface of the multilayered material to be marked, on the areas to be marked.

FIG. 1

FIG. 2

7

FIG.3

EP 0201391 B1